# EUROPEAN PATENT APPLICATION

(11) **EP 4 206 763 A1**
(43) Date of publication of application: **05.07.2023**
(21) Application number: 22216056.6
(22) Date of filing: 22.12.2022
(51) Int. Cl.: G02B 6/02

(54) **MULTI-CORE OPTICAL FIBER**

(30) Priority: 28.12.2021 IN 202111061335
(71) Applicant: Sterlite Technologies Limited, Haryana 122002 (IN)
(72) Inventor: Reddy Munige, Srinivas, 122002 Gurugram (IN); Malviya, Apeksha, 122002 Gurugram (IN); Pandey, Anand, 122002 Gurugram (IN)
(74) Representative: Petraz, Gilberto Luigi

(57) **Abstract**

The present disclosure relates to multi-core optical fibers (100, 200) comprising a plurality of cores (102) including a first through fourth cores (102a, 102b, 102c, 102d), a cladding layer (104), and a coating layer (106). In particular, the plurality of cores (102) extends parallelly along a central axis of the multi-core optical fiber (100) defining a plurality of spatial paths such that each core of the plurality of cores (102) has a refractive index profile having a predefined core alpha value in a range from 5 to 9. Moreover, at least one core has at least one of (i) a refractive index profile different from other cores of the plurality of cores (102), and (ii) a core diameter different from the other cores of the plurality of cores (102).

## Description

### TECHNICAL FIELD

Embodiments of the present invention relate to the field of optical fibers and more particularly, relate to a multi-core optical fiber.

This application claims the benefit of Indian Application No. 202111061335.titled "Multi-core optical fiber" filed by the applicant on 28/12/2021, which is incorporated herein by reference in its entirety.

### BACKGROUND ART

Telecommunications networks include access networks where end-user subscribers connect to service providers. With the advancement of science and technology, various modern technologies are being employed for communication purposes. To meet increasing consumer demands, bandwidth requirements for providing high speed data and video services over access networks are growing rapidly. Being one of the most important modern communication technologies, the optical fiber communication technology uses a variety of optical fiber cables.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Generally two main categories of optical fibers exist: multimode fibers and single-mode fibers. Conventionally, step-index fibers, also called SMF fibers ("Single Mode Fibers") are used as line fibers for optical fiber transmission systems in which a single mode of light is transmitted as a carrier for propagation at a time. In a single-mode optical fiber, the signal propagates in a fundamental LP01 mode that is guided in the fiber core, while the higher order modes (e.g., the LP11 mode) are strongly attenuated. The core of a single-mode optical fiber typically has a diameter of between about 6 microns and 9 microns. These fibers exhibit a chromatic dispersion and a chromatic dispersion slope corresponding to specific telecommunication standards.

However, such SMFs have associated bandwidth limitations. Additionally, such SMFs exhibit non-linear effects due to increase in the data transmission rate beyond a transmission capacity limit. The non-linear effects can further result in low optical signal to noise ratio (OSNR). The bandwidth limitations can be reduced by designing multi-core optical fibers that have multiple glass cores to transmit multiple optical signals. Additionally, by increasing the number of channels per fiber and by optimizing the number of cores and a design of the multi-core optical fiber the bandwidth limitations can be reduced.

A multi-core fiber (MCF) typically comprises a central core surrounded by several satellite cores in a radial pattern surrounding the central core. The multi-core fiber can have multiple glass cores that are surrounded by a glass cladding. Each of the central and satellite cores is potentially a light carrying path, and the MCF thus provides multiple parallel paths for optical signal transmission and/or reception in a single fiber. Generally, an alpha value of the refractive index profile of the core has a significant impact on distribution of light inside the core and thus effects an effective refractive index of guiding modes in the optical fibers.

WIPO patent application no. WO2020149158A1 titled "Multicore optical fiber and design method" discloses a multicore optical fiber having a standard clad diameter with four unimodal cores arranged therein that exhibits excellent mass productivity, quality, and yield while satisfying a desired specification.

WIPO patent application no. WO2020105470A1 titled "Multicore optical fiber, method of designing multicore optical fiber, and optical transmission method" discloses a multicore optical fiber having four cores with a clad diameter standard of 125±1 micrometers (µm) capable of coping with transmission over a distance of several thousands of kilometers.

Japanese patent application no. JP6372598B2 titled "Multi-core optical fiber, multi-core optical fiber cable, and multi-core optical fiber transmission system" discloses a multi-core optical fiber comprising a plurality of cores each extending along a predetermined axis and arranged on a cross section perpendicular to the predetermined axis, and a cladding region integrally surrounding each of the plurality of cores.

US patent application no. US8737793B2 titled "Multi-core optical fiber and method of manufacturing the same" discloses a multi-core optical fiber including a plurality of core portions, and a cladding portion positioned so as to surround each of the core portions, wherein each core portion includes a center core portion that has a refractive index greater than that of the cladding portion, a second core portion that is formed so as to surround the center core portion and that has a refractive index less than that of the center core portion, and a depressed portion that is formed so as to surround the second core portion.

However, there are a few drawbacks in the currently similar technologies providing multicore optical fibers. The multicore optical fibers provided by the current technologies have higher sensitivity to dispersion. The higher sensitivity to dispersion can stretch or flatten an initially sharply defined binary pulses of information. Such degradation can make the optical signals (1s and 0s) more difficult to distinguish from each other at the far end of the multicore optical fiber. Moreover, a requirement of low total crosstalk in interconnects limits the density of cores within the multi-core optical fiber, and thus the capacity scaling, compactness, and cost of the interconnect formed from the multi-core optical fiber.

Accordingly, to overcome the disadvantages of the prior art, there is an urgent need for a technical solution that overcomes the above-stated limitations in the prior arts. The present invention focuses on an optimized multi-core optical fiber.

### SUMMARY OF THE DISCLOSURE

Embodiments of the present disclosure provide a multi-core optical fiber. In particular, the multi-core optical fiber comprises a plurality of cores extending parallelly along a central axis of the multi-core optical fiber. Moreover, the plurality of cores define a plurality of spatial paths in a way that each core of the plurality of cores has a refractive index profile having a predefined core alpha value in a range from 5 to 9. Further, at least one core of the plurality of cores has at least one of (i) a refractive index profile different from other cores of the plurality of cores, and (ii) a core diameter different from the other cores of the plurality of cores.

According to the first aspect of the present disclosure, a core pitch between each pair of cores of the plurality of cores is in a range from 35 micrometres (µm) to 45 µm.

In accordance with an embodiment of the present invention, the plurality of cores has an even number of cores.

According to a second aspect of the present disclosure, the multi-core optical fiber further comprises a cladding layer having has an inner cladding and an outer cladding. In particular, the inner cladding envelops the outer circumferential surface of each core of the plurality of cores. Moreover, the outer cladding envelops an outer circumferential surface of the inner cladding. Further, an outer cladding thickness of the outer cladding is greater than or equal to 30 micrometres (µm).

In accordance with an embodiment of the present invention, the cladding layer has a diameter in a range from 100 µm to 300 µm.

According to a third aspect of the present disclosure, the multi-core optical fiber further comprises a coating layer that envelops the cladding layer. In particular, a coating diameter of the coating layer is in a range from 160 µm to 500 µm.

According to a fourth aspect of the present disclosure, a maximum relative refractive index Δ₁max between each core of the plurality of cores and the cladding layer is 0.5%.

According to a fifth aspect of the present disclosure, each core of the plurality of cores has a shape selected from at least one of, a circular shape, an oval shape, a hexagonal shape, a triangular shape, and an irregular shape.

The foregoing solutions of the present invention are attained by providing a multi-core optical fiber.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a cross-sectional view illustrating a multi-core optical fiber in accordance with one embodiment of the present invention; and
Fig. 2 is a cross-sectional view illustrating a multi-core optical fiber in accordance with one embodiment of the present invention.

### REFERENCE LIST

Multi-core optical fiber - 100, 200
Plurality of cores - 102, 102a, 102b, 102c,102d
Cladding layer - 104
Coating layer - 106
Inner cladding - 108
Outer cladding - 110

The multi core optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Optical fiber refers to a medium associated with transmission of information over long distances in the form of light pulses. The optical fiber uses light to transmit voice and data communications over long distances when encapsulated in a jacket/sheat

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis.

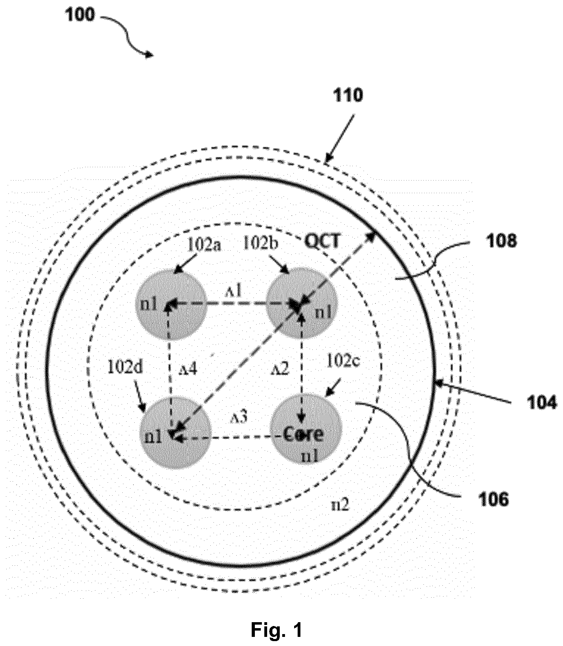

Fig. 1 is a cross-sectional view illustrating a multi-core optical fiber 100 in accordance with one embodiment of the present invention. In particular, the multi-core optical fiber 100 comprises a plurality of cores 102 of which a first through fourth cores 102a, 102b, 102c and 102d (hereinafter interchangeably referred to and designated as "the plurality of cores 102"), a cladding layer 104, and a coating layer 106. Moreover, the first through fourth cores 102a, 102b, 102c and 102d are parallely arranged to a central axis CX of the multi-core optical fiber 100 in a way that the first through fourth cores 102a, 102b, 102c and 102d run longitudinally i.e., parallel to the central axis CX.

Further, the multi-core optical fiber 100 is designed to employ space division multiplexing (SDM) technique to transmit a plurality of optical signals through a plurality of spatial paths defined by the first through fourth cores 102a, 102b, 102c and 102d simultaneously. Further, the plurality of spatial paths defined by the first through fourth cores 102a, 102b, 102c and 102d carry the plurality of optical signals within the multi-core optical fiber 100. Additionally, the simultaneous transmission of the plurality of optical signals through the plurality of cores 102 exponentially increases a transmission capacity of the multi-core optical fiber 100.

In accordance with an embodiment of the present invention, the multi-core optical fiber 100 is manufactured by isotropically and/or anisotropically distributing the first through fourth cores 102a, 102b, 102c and 102d in the same optical fiber i.e., the multi-core optical fiber 100.

Further, the plurality of cores 102a through 102d is arranged in a predefined symmetrical lattice on the cross-section perpendicular to an axis extending parallelly along the central axis CX of the multi-core optical fiber 100.

In accordance with an embodiment of the present invention, the predefined symmetrical lattice is a hexagonal lattice.

In accordance with an embodiment of the present invention, the predefined symmetrical lattice is a square lattice.

Further, the symmetrical lattice refers to the arrangement of the first through fourth cores 102a, 102b, 102c and 102d in a manner that first through fourth cores 102a, 102b, 102c and 102d are arranged corresponding to each other and/or around the central axis CX defining symmetry.

Further, the plurality of cores 102a through 102d are arranged in a predefined symmetrical lattice on the cross-section perpendicular to an axis extending parallelly along the central axis CX of the multi-core optical fiber 100.

In accordance with an embodiment of the present invention, the predefined lattice can be a hexagonal lattice.

In accordance with an embodiment of the present invention, the predefined symmetrical lattice is a square lattice.

In accordance with an embodiment of the present invention, the first through fourth cores 102a, 102b, 102c and 102d are designed to guide the plurality of optical signals. In particular, the first through fourth cores 102a, 102b, 102c and 102d may be a cylindrical fiber that may run along a length of the multi-core fiber 100. Moreover, the first through fourth cores 102a, 102b, 102c and 102d are made up of a material selected from at least one of a plastic, a pure silica glass, a doped silica glass, and the like.

In accordance with an embodiment of the present invention, each core of the first through fourth cores 102a, 102b, 102c and 102d define a spatial path in a way that each spatial path defined by each core facilitates in carrying the optical signal. In particular, each core of the first through fourth cores 102a, 102b, 102c and 102d has an associated refractive index profile. The "refractive index profile" is a relationship between a refractive index or a relative refractive index and optical fiber radius of the multi-core optical fiber 100. Moreover, the refractive index profile has a predefined core alpha value. The predefined core alpha value is in a range of 5 to 9.

In accordance with an embodiment of the present invention, the predefined core alpha value may be selected in the range of 5 to 9 as core alpha value below 5 can make the multi-core optical fiber 100 highly dispersion sensitive. Alternatively, the predefined core alpha value beyond 9 can reduce a dispersion sensitivity of the multi-core optical fiber 100, however, such high values for the predefined core alpha value makes manufacturing process difficult for the multi-core optical fiber 100, therefore, the predefined core alpha value for the multi-core optical fiber 100 is selected in the range of 5 to 9. Moreover, the predefined core alpha value of each core of the first through fourth cores 102a, 102b, 102c and 102d facilitates in providing a lower sensitivity to dispersion for the multi-core optical fiber 100. Further, the predefined core alpha value facilitate attaining a mode field diameter (MFD) in a range of 7.9 micrometers (µm) to 9.5 µm at an operating wavelength of 1550 nanometers (nm) and 1310 nm.

In accordance with an embodiment of the present invention, the first through fourth cores 102a, 102b, 102c and 102d are circular in shape.

In accordance with an embodiment of the present invention, the first through fourth cores 102a, 102b, 102c and 102d may have any type of shape such as, but not limited to, an oval shape, a hexagonal shape, a triangular shape, an irregular shape, and the like.

In accordance with an embodiment of the present invention, the first through fourth cores 102a, 102b, 102c and 102d have a core radius that is in a range from 3 micrometers (µm) to 4 µm. In particular, the first through fourth cores 102a, 102b, 102c and 102d have a core diameter in a range from 6 µm to 8 µm.

In accordance with an embodiment of the present invention, at least one core of the first through fourth cores 102a, 102b, 102c and 102d has at least one of a refractive index profile different from a refractive index profile of the other cores of the first through fourth cores 102a, 102b, 102c and 102d and a core diameter different from a core diameter of the other cores of the first through fourth cores 102a, 102b, 102c and 102d to ensure mixing of signals in the multi-core optical fiber 100.

In accordance with an embodiment of the present invention, the core diameter of the first core 102a is 6 µm and the core diameter of the second through fourth cores 102b, 102c, and 102d is 8 µm.

In accordance with an embodiment of the present invention, the core diameter of the first core 102a is 6 µm and the core diameter of the second and third cores 102b and 102c is 8 µm.

In accordance with an embodiment of the present invention, each of the first through fourth cores 102a, 102b, 102c and 102d may not have the same refractive index and may not have the same refractive index profile.

In an exemplary example, the first core 102a, the second core 102b, the third core 102c, and the fourth core 102d has a first refractive index profile, a second refractive index profile, a third refractive index profile, and a fourth refractive index profile, respectively. In particular, the first refractive index profile, the second refractive index profile, and the third refractive index profile of the first core 102a, the second core 102b, and the third core 102c are respectively the same. However, the fourth refractive index profile of the fourth core 102d is different than the first refractive index profile, the second refractive index profile, the third refractive index profile. Moreover, the first core 102a, the second core 102b, the third core 102c, and the fourth core 102d have a first core diameter, a second core diameter, a third core diameter, and a fourth core diameter, respectively. Further, a numerical value of the first core diameter, the second core diameter and the third core diameter are equal. However, a numerical value of the fourth core diameter can be different from the numerical value of the first core diameter, the second core diameter and the third core diameter.

In accordance with an embodiment of the present invention, the predefined core alpha value of the refractive index profile associated with the first core 102a is 7 while the predefined core alpha value of the refractive index profiles associated with the second through fourth cores 102b, 102c, and 102d is 8.

In accordance with an embodiment of the present invention, the predefined core alpha value of the refractive index profile associated with the first core 102a is 9 while the predefined core alpha value of the refractive index profiles associated with the second through fourth cores 102b, 102c, and 102d is 5.

Particularly, the different predefined core alpha value of the refractive index profiles of the first through fourth cores 102a, 102b, 102c, and 102d may be selected to ensure prevention of mixing of signals in the multi core optical fiber 100.

In accordance with an embodiment of the present invention, each pair of the cores of the first through fourth cores 102a, 102b, 102c and 102d have a predefined core pitch. Specifically, the predefined core pitch is in a range from 35 µm to 45 µm.

In an exemplary example, the first core 102a and the adjacent second core 102b has a first core pitch ∧1, the second core 102a and the adjacent third core 102b has a second core pitch ∧2, the third core 102c and the adjacent fourth core 102d has a third core pitch ∧3, and the fourth core 102d and the adjacent first core 102a has a fourth core pitch ∧4. In particular, the first through fourth core pitch ∧1 through ∧4 are distance between each pair of the cores of the plurality of cores 102a through 102d. Specifically, a numerical value of the first through fourth core pitch ∧1 through ∧4 is in a range from about 35 µm to about 45 µm.

In accordance with an embodiment of the present invention, the numerical value of the first through fourth core pitch ∧1 through ∧4 is same.

In accordance with an embodiment of the present invention, the numerical value of the first through fourth core pitch ∧1 through ∧4 can be different.

In an exemplary example, the first core pitch ∧1 is 37 µm while the second through fourth core pitch ∧2 through ∧4 is 40 µm.

In an exemplary example, the first core pitch ∧1 is 35 µm, the second core pitch ∧2 is 40 µm while the third and fourth core pitch ∧3 and ∧4 is 45 µm.

In accordance with an embodiment of the present invention, the multi-core optical fiber 100 has a cladding layer 104 that may surround an outer circumferential surface of the plurality of cores 102 i.e., the first through fourth cores 102a, 102b, 102c and 102d. In particular, the cladding layer 104 has an inner cladding 108 and an outer cladding 110. Moreover, the inner cladding 108 is provided in a way that the inner cladding 108 envelops the outer circumferential surface of the plurality of cores 102 i.e., the first through fourth cores 102a, 102b, 102c, and 102d with no gap between an outer surface of each of the first through fourth cores 102a, 102b, 102c, and 102d and the inner cladding 106. Furthermore, the inner cladding 108 is made of silica glass with a doping of at least one of chlorine and fluorine.

In accordance with an embodiment of the present invention, the inner cladding 108 is made up of the silica glass in a way that a refractive index of the inner cladding 108 is decreased by adding a dopant such as fluorine (F).

In accordance with an embodiment of the present invention, the inner cladding 108 is made up of the silica glass in a way that the refractive index of the inner cladding 108 is increased by adding a dopant such as chlorine (Cl).

Further, the refractive index of the inner cladding 108 can be manipulated to ensure restriction of the light signal well within the first through fourth cores 102a, 102b, 102c, and 102d of the multi-core optical fiber100.

Further, the outer cladding 110 is provided in a way that the outer cladding 110 envelops an outer circumferential surface of the plurality of cores 102 i.e., the first through fourth cores 102a, 10/2b, 102c, and 102d. Further, the outer cladding 110 may be configured to restrict the light signal well within the first through fourth cores 102a, 102b, 102c, and 102d in order to prevent mixing up of cores in the multi-core optical fiber 100. Specifically, the outer cladding 110 may envelop an outer circumferential surface of the inner cladding 108 such that there exists no gap between the outer surface of the inner cladding 108 and an inner surface of the outer cladding 110. Further, the outer cladding 100 is made up of pure silica glass. Additionally, a refractive index of the outer cladding 110 is adjusted by adding a dopant such as, but not limited to, germanium (Ge), fluorine (F), and the like.

In accordance with an embodiment of the present invention, the outer cladding 108 has an associated outer cladding thickness (OCT) greater than or equal to 30 µm.

In an exemplary example, the OCT is a distance from the center of any of the core of the plurality of cores 102 to an interface of the outer cladding 110 with the coating 106.

Particularly, the cladding layer 104 has an associated cladding diameter having a thickness of the inner cladding 108 and the outer cladding 110.

In accordance with an embodiment of the present invention, the cladding diameter is in a range from 100 µm to 300 µm. Moreover, the cladding layer 104 has an associated refractive index less than the refractive index of each of the core of the plurality of cores 102.

In an exemplary example, the refractive index of each of the core of the plurality of cores 102 can be n1 and the refractive index of the cladding layer 104 is n2 such that n2 is less than n1.

In accordance with an embodiment of the present invention, a relative refractive index Δ1 which is the comparative refractive index between at least one core of the plurality of cores 102 having the refractive index n1 with the cladding layer 104 having the refractive index n2 is 0.5%. Moreover, a maximum relative refractive index Δ1max which is the comparative refractive index between at least one core of the plurality of cores 102 having the refractive index n1 with the cladding layer 104 having the refractive index n2 is 0.5%.

In accordance with an embodiment of the present invention, the multi-core optical fiber 100 has the coating layer 106. In particular, the coating layer 106 can have one or more coatings of which a primary coating 106a and a secondary coating 106b.

In accordance with an embodiment of the present invention, the coating layer 106 can have any number of layers similar to the primary layer 106a and/or the secondary layer 106b.

In accordance with an embodiment of the present invention, the primary coating 106a is made up of an ultraviolet (UV) light curable resin is formed of an exemplary first colored material.

In accordance with an embodiment of the present invention, the primary coating 106a and the secondary coating 106b can have the UV light curable acrylate mixture of monomers, oligomers, photo initiators, and additives, such that the mixtures are cured separately. Moreover, the coating layer 106 may have an associated coating diameter. The coating diameter of the coating layer 106 is in a range from 160 µm 500 µm.

In accordance with an embodiment of the present invention, for the first through fourth core 102a, 102b, 102c and 102d, the relative refractive index is between 0.37 and 0.4%, the core radius of each core of the plurality of cores 102a, 102b, 102c and 102d is between 3.42 and 3.77 µm, the core alpha is between 6 and 9, the cladding diameter of the cladding layer 104 is between 120 and 250, the coating diameter of the coating layer 110 of the multi-core optical fiber 100 is between 160 µm and 500 µm, and the outer cladding thickness (OCT) of the outer cladding 108 is 32.1 µm. In particular, the core pitch is between 40 and 45 µm.

Moreover, the multi-core optical fiber 100 fabricated based on above numerical values may have a crosstalk between -32 decibel/kilometer (dB/km) and -56 dB/km, at 140 millimeters (mm) bend condition of the multi-core optical fiber 100 and at a transmission length of 30 km, the MFD at the wavelength of 1550 nm between 9.36 µm and 9.6 µm, the MFD at the wavelength of 1310 nm between 7.98 µm and 8.33 µm, a cable cut-off between 1122 nm and 1219 nm, a zero-dispersion wavelength (ZDW) between 1339.4 nm and 1360 nm, an attenuation of the multi-core optical fiber 100 at a wavelength of 1310 nm is less than 0.35 db/km, an attenuation of a cable formed by using the multi-core optical fiber 100 at a wavelength of 1310 nm is less than 0.4 db/km, the attenuation of the multi-core optical fiber 100 at a wavelength of 1550 nm is less than 0.25 db/km, and the attenuation of the cable formed by using the multi-core optical fiber 100 at a wavelength of 1550 nm is less than 0.3 db/km.

Further, the multi-core optical fiber 100 can be configured to transmit multiple optical signals through the parallel spatial paths defined by the plurality of cores 102 simultaneously. Hence, the data transmission capacity of the cable manufactured using the multi-core optical fiber 100 is increased. Further, the multi-core optical fiber 100 has the core alpha value in the range of 5 to 9 facilitating establishment of a good control over confinement and to attain the MFD at the wavelength of 1550 nm and 1310 nm in a range of 9.1±0.5 micrometer (µm) and 8.1± 0.5 µm, respectively.

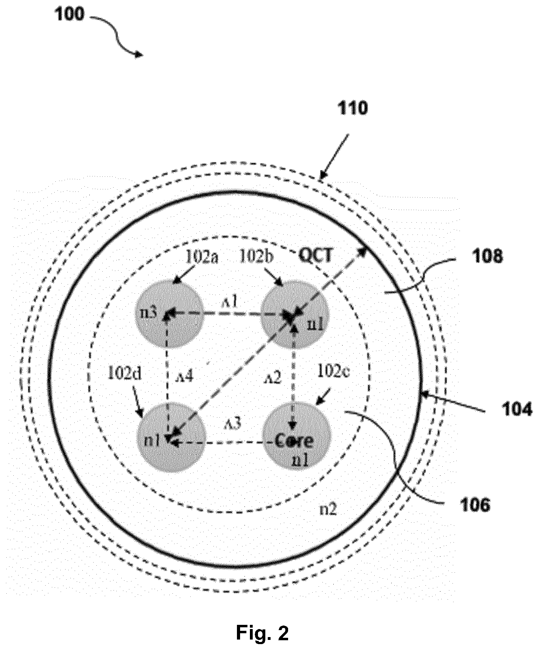

Fig. 2 is a cross-sectional view illustrating a multi-core optical fiber 200 in accordance with one embodiment of the present invention. In particular, the multi-core optical fiber 200 is similar to the multi-core optical fiber 100 with like elements referenced with like numerals. However, the multi-core optical fiber 200 may have the plurality of cores 102 with different values of the refractive indexes as compared to the multi-core optical fiber 100.

Moreover, the refractive index of one core, for example the first core 102a, of the plurality of cores 102 may have a refractive index n3 while the other cores, for example the second through fourth cores 102b, 102c, 102d, may have the refractive index of n1. In such examples, the refractive index of the cladding layer can be n2.

It will be apparent to a person skilled in the art that the multi-core optical fiber 100 is shown to have four cores (i.e., the first through fourth cores 102a, 102b, 102c and 102d) to make the illustrations concise and clear and should not be considered as a limitation of the present invention. In various other aspects, the multi-core optical fiber 100 can have more than four cores i.e., the multi-core optical fiber 100 can have an even number of cores, without deviating from the scope of the present invention. In such scenario, the plurality of cores 102 can have two or more cores.

It will be apparent to a person skilled in the art that the first through fourth cores 102a, 102b, 102c and 102d are shown to be arranged in the square lattice to make the illustrations concise and clear and should not be considered as a limitation of the present invention. In various other aspects, the first through fourth cores 102a, 102b, 102c and 102d can be arranged in any type of the predefined symmetrical lattice, without deviating from the scope of the present invention.

Aspects of the present invention are intended to cover any type of the material for the first through fourth cores 102a, 102b, 102c and 102d, including known, related and later developed materials known to a person of ordinary skill in the art.

It will be apparent to a person skilled in the art that the first through fourth cores 102a, 102b, 102c and 102d are shown to have the circular shape to make the illustrations concise and clear and should not be considered as a limitation of the present invention.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A multi-core optical fiber, comprising:
a plurality of cores extending parallelly along a central axis of the multi-core optical fiber, and defining a plurality of spatial paths such that each core of the plurality of cores has a refractive index profile having a predefined core alpha value in a range from 5 to 9; and
wherein at least one core of the plurality of cores has at least one of (i) a refractive index profile different from other cores of the plurality of cores, and (ii) a core diameter different from the other cores of the plurality of cores.

2. The multi-core optical fiber of claim 1, wherein a core pitch between each pair of cores of the plurality of cores is in a range from 35 micrometres (µm) to 45 µm.

3. The multi-core optical fiber of claim 1, wherein the plurality of cores has an even number of the cores.

4. The multi-core optical fiber of claim 1, further comprising a cladding layer having has an inner cladding and an outer cladding.

5. The multi-core optical fiber of claim 1, wherein the inner cladding envelops the outer circumferential surface of each core of the plurality of cores.

6. The multi-core optical fiber of claim 1, wherein the outer cladding envelops an outer circumferential surface of the inner cladding.

7. The multi-core optical fiber of claim 1, wherein an outer cladding thickness of the outer cladding is greater than or equal to 30 micrometres (µm).

8. The multi-core optical fiber of claim 4, wherein the cladding layer has a diameter in a range from 100 µm to 300 µm.

9. The multi-core optical fiber of claim 4, further comprising a coating layer that envelops the cladding layer.

10. The multi-core optical fiber of claim 4, wherein a coating diameter of the coating layer is in a range from 160 µm to 500 µm.

11. The multi-core optical fiber of claim 1, wherein a maximum relative refractive index Δ₁max between each core of the plurality of cores and the cladding layer is 0.5%.

12. The multi-core optical fiber of claim 1, wherein each core of the plurality of cores has a shape selected from at least one of, a circular shape, an oval shape, a hexagonal shape, a triangular shape, and an irregular shape.

13. The multi-core optical fiber of claim 1, wherein the plurality of cores including the first through fourth cores are arranged in a predefined symmetrical lattice on the cross-section perpendicular to an axis extending parallelly along the central axis CX of the multi-core optical fiber.

14. The multi-core optical fiber of claim 1, wherein the predefined symmetrical lattice is any of a hexagonal lattice, a square lattice and the like.

15. The multi-core optical fiber of claim 1, wherein the plurality of cores including the first through fourth cores are made up of material selected from at least one of a plastic, a pure silica glass, a doped silica glass, and the like.
